# EUROPEAN PATENT APPLICATION

(11) **EP 4 738 638 A1**
(43) Date of publication of application: **06.05.2026**
(21) Application number: 24209672.5
(22) Date of filing: 30.10.2024
(51) Int. Cl.: H02J 7/00, H02J 1/08, H02M 7/487

(54) **BATTERY SYSTEM WITH DISTRIBUTED VOLTAGE LEVELS**

(71) Applicant: Volvo Penta Corporation, 405 08 Göteborg (SE)
(72) Inventor: Kersten, Anton, 433 42 Partille (SE); Mirbagheri, Mina, 417 60 Göteborg (SE)
(74) Representative: Valea AB

(57) **Abstract**

A battery system (300) having a middle bus line (ML), a positive bus line (PL) and a negative bus line (NL) is provided. The battery system (300) comprises: a battery module (310), a multilevel neutral point clamped inverter (320). One or more direct current to direct current converters (DC/DC) and two or more auxiliary loads (L1, L2, ...) are connected either between the positive and negative bus lines (PL, NL), or between the positive and middle bus lines (PL, ML), or between the negative and middle bus lines (NL, ML). The operation of the DC/DC converters is configurable to balance the loads of the battery module (310) and/or control charging/discharging of the battery module (310). The connections of the two or more auxiliary loads (L1, L2, ...) are configurable to balance the loads of the battery module (310).

## Description

### TECHNICAL FIELD

The disclosure relates generally to energy storage systems. In particular aspects, the disclosure relates to battery systems with distributed voltage levels. The disclosure can be applied to any electrical energy storage systems and vehicles using electrical energy storage system, such as heavy-duty vehicles, e.g. trucks, buses, and construction equipment, among other vehicle types. Although the disclosure may be described with respect to a particular vehicle, the disclosure is not restricted to any particular vehicle.

### BACKGROUND

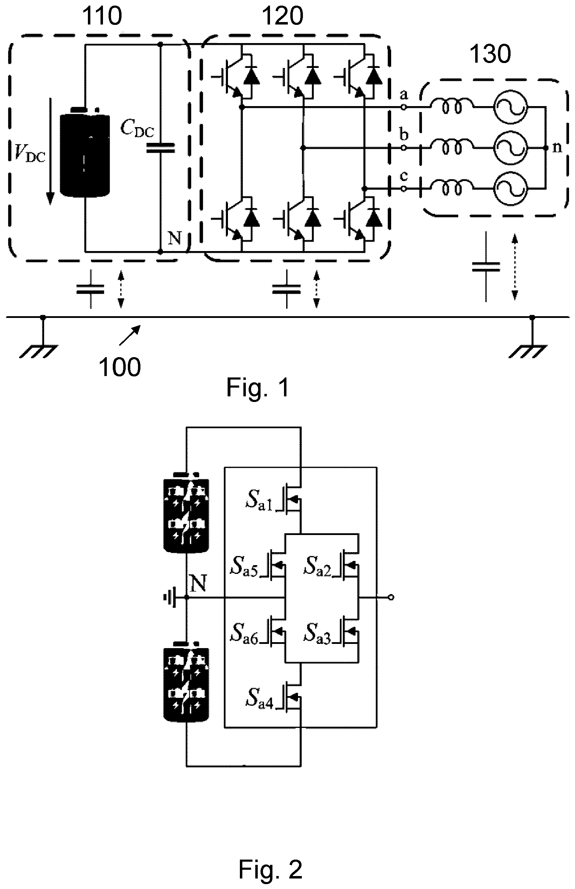

A battery energy storage system (BESS) is a system that stores energy in rechargeable batteries for later use. It's widely used in energy systems to provide backup power and stabilize energy supply. In a typical BESS, power conversion system comprising one or more power electronic stages, e.g. direct current to direct current (DC/DC) converters, direct current to alternating current (DC/AC) inverters, alternating current to direct current (AC/DC) inverters are used to handle bidirectional flow of power, allowing for both charging from a power system or energy sources, e.g. traditional grid, renewable energy sources, motors etc., to the BESS and discharging from the BESS to the power system. **Fig.1** shows an example BESS **100** comprising a battery module **110** comprising a battery with a voltage level **V_{DC}** and a DC link capacitor **C_{DC}**, a 3-phase DC/AC inverter **120** and a 3-phase AC grid **130.** The inverter 120 may operate with a high DC link voltage e.g. 1200V. A higher DC voltage level may reduce a cable cross section on the DC link side so that the cost is reduced if long cables are used for DC link. The inverter 120 is a two-level inverter topology which becomes costly at higher voltage levels.

Multilevel Neutral Point Clamped (NPC) inverters are usually used in bidirectional AC/DC converters in electrical systems, particularly in applications such as motor drives in vehicles. NPC inverter is a type of multilevel power inverter known for its ability to produce high-quality output voltage with reduced total harmonic distortion and lower switching losses compared to conventional two-level inverters. **Figs. 2** is a schematic block diagram showing an example NPC inverter which comprises a battery module with a neutral point N. The NPC inverter achieves these benefits through its unique topology, which includes multiple power semiconductor switches **Sa1**, **Sa2**, **...Sa6** implemented by e.g. Insulated Gate Bipolar Transistors (IGBTs) or Metal-Oxide-Semiconductor Field-Effect Transistors (MOSFETs), arranged in such a way that they can generate several voltage levels across a load. To save cost and operate with a motor driving system, the NPC inverter needs to operate with high voltage levels.

Auxiliary components or loads e.g. fans, heat pumps, compressors etc. in a vehicle may operate with different voltage levels than the high voltage level for the motor driving system. Having different battery packs with different voltage levels for different auxiliary components may not be practical regarding cost and efficiency. A cost-effective solution on the entire system level is needed.

### SUMMARY

According to a first aspect of the disclosure, a battery system having a positive bus line, a negative bus line and a middle bus line is provided. The battery system comprises a battery module having a first tap, a first terminal and a second terminal. The first tap is connected to the middle bus line, the first terminal is connected to the positive bus line and the second terminal is connected to the negative bus line. The battery system further comprises a multilevel NPC inverter having a neutral terminal, an output terminal, a positive terminal and a negative terminal. The neutral terminal of the multilevel NPC inverter is connected to the first tap of the battery module, and the positive and negative terminals of the multilevel NPC inverter are connected to the first and second terminals of the battery module respectively. The battery system further comprises at least direct current to direct current converter (DC/DC) connected either between the positive and negative bus lines, or between the positive and middle bus lines, or between the negative and middle bus lines. The operation of at least one DC/DC converter is configurable for at least one of balancing loads of the battery module and controlling charging/discharging of the battery module. The at least two auxiliary loads are connected either between the positive and negative bus lines, or between the positive and middle bus lines, or between the negative and middle bus lines, directly or via respective switches.

The first aspect of the disclosure may seek to provide a battery system which can provide different voltage supplies for auxiliary loads. A technical benefit may include providing different voltage levels for auxiliary components by making the midpoint of the battery system accessible for the auxiliary components, active balancing or proactive balancing the loads of the battery system by controlling the operation of the one or more DC/DC converters and configurable connection of the two or more auxiliary loads to the battery system and providing scalable voltage levels.

Optionally in some examples, including in at least one preferred example, current flows in the one or more DC/DC converters are adjusted to regulate at least one of power flows to at least one low voltage system, and power flows to and from the battery module. A technical benefit may include balancing the loads of the battery module and/or controlling the charging of the battery module so that the battery system efficiency is improved, and the lifetime of the battery system is increased.

Optionally in some examples, including in at least one preferred example, the at least two auxiliary loads may comprise at least one of fans, heat pumps, motor loads, compressors, heaters, cooling system, climate system, and resistive loads. A technical benefit may include providing voltage supplies to various auxiliary loads in a vehicle with a cost-effective solution on entire system level. In this way, vehicle components from different venders other than vehicle producers themselves may be used directly without modification or implementation of extra hardware.

Optionally in some examples, including in at least one preferred example, the at least one low voltage system may comprise at least one of a 12V system, a 24V system, and a 48V system. A technical benefit may include providing voltage supplies to various low voltage systems in a vehicle with a cost-effective solution on entire system level.

Optionally in some examples, including in at least one preferred example, the battery module may comprise at least two battery packs stacked, and at least two taps placed at respective connection points between any two battery packs. A technical benefit may include providing a higher voltage levels, making midpoints of any two battery packs accessible for providing different voltage levels to the auxiliary components or loads.

Optionally in some examples, including in at least one preferred example, a number of taps and locations to place the taps may be fixed or varied depending on the number of the auxiliary loads and required voltage levels of the auxiliary loads. A technical benefit may include making the number of midpoints of any two battery packs accessible based on the number of auxiliary loads and required DC voltage levels of the auxiliary loads. In this way, vehicle components from different venders other than vehicle producers themselves may be used directly without modification or implementation of extra hardware.

Optionally in some examples, including in at least one preferred example, the connections of the middle bus line, the positive bus line and the negative bust line to the battery module may be fixed or varied. A technical benefit may include providing configurable voltage levels with required voltage levels for various auxiliary loads.

Optionally in some examples, including in at least one preferred example, the positive bus line may be connected to the first terminal of the battery module or to any one of the taps except the last tap, the negative bus line may be connected to the second terminal or to any one of the taps except the first tap, the middle bus line may be connected to any one of the two or more taps. A technical benefit may include providing configurable bus lines with different voltage levels based on required voltage levels of various auxiliary loads.

Optionally in some examples, including in at least one preferred example, the positive bus line may be connected to the first terminal of the battery module, the middle bus line may be connected to any one of the at least two taps, and the negative bus line may be connected to the second terminal of the battery module.

Optionally in some examples, including in at least one preferred example, the battery system may comprise at least two middle bus lines. The positive bus line may be connected to the first terminal of the battery module, the at least two middle bus lines may be respectively connected to the at least two taps, and the negative bus line may be connected to the second terminal of the battery module.

According to a second aspect of the disclosure, a vehicle comprises a battery system of the first aspect is provided. The second aspect of the disclosure may seek to provide a vehicle comprising a battery system which can provide different voltage supplies for auxiliary loads. A technical benefit may include providing different voltage levels for auxiliary components by making the midpoint of the battery system accessible for the auxiliary components, active balancing or proactive balancing the loads of the battery system by controlling the operation of the one or more DC/DC converters and configurable connection of the two or more auxiliary loads to the battery system and providing scalable voltage levels.

According to a third aspect of the disclosure, a method for distributing power from a battery system to two or more auxiliary loads is provided. The method comprises configuring the battery system to have a positive DC bus line, a negative DC bus line and a middle DC bus line; providing a battery module having a first tap, a first terminal and a second terminal; providing a connection between the first tap and the middle bus line, a connection between the first terminal and the positive bus line and a connection between the second terminal and the negative bus line; providing a multilevel NPC inverter having a neutral terminal, an output terminal, a positive terminal and a negative terminal; providing a connection between the neutral terminal of the multilevel NPC inverter and the first tap of the battery module, a connection between the positive terminal of the multilevel NPC inverter and the first terminal of the battery module, and a connection between the negative terminal of the multilevel NPC inverter and the second terminal of the battery module; providing connections to two or more auxiliary loads and to one or more direct current to direct current converters (DC/DC), such that the two or more auxiliary loads and the one or more DC/DC converter are connected either between the positive and negative bus lines, or between the positive and middle bus lines, or between the negative and middle bus lines, directly or via respective switches; and configuring operation of the one or more DC/DC converters to balance the loads of the battery module and/or control charging/discharging of the battery module.

The third aspect of the disclosure may seek to provide a battery system which can distribute different voltage supply levels for various auxiliary loads. A technical benefit may include distributing different voltage levels for auxiliary components by configuring a first tap of the battery module accessible for the auxiliary components, active balancing or proactive balancing the loads of the battery system by controlling the operation of the one or more DC/DC converters and making the connections of the two or more auxiliary loads to the battery system configurable, providing scalable voltage levels, providing a cost-effective solution on entire system level.

Optionally in some examples, including in at least one preferred example, the method may comprise adjusting current flows in the one or more DC/DC converters, thereby regulating at least one of power flows to at least one low voltage system, and power flows to/from the battery module. A technical benefit may include balancing the loads of the battery module and/or controlling the charging/discharging of the battery module so that the battery system efficiency is improved and the lifetime of the battery system is increased.

Optionally in some examples, including in at least one preferred example, the method may comprise providing at least two battery packs in the battery module and providing at least two taps placed at respective connection points between any two battery packs. A technical benefit may include providing a higher voltage levels, making midpoints of any two battery packs accessible for providing different voltage levels to the auxiliary components or loads.

Optionally in some examples, including in at least one preferred example, a number of taps and locations to place the taps may be fixed or varied depending on the number of the auxiliary loads and required voltage levels of the auxiliary loads. A technical benefit may include making the number of midpoints of any two battery packs accessible based on the number of auxiliary loads and their required DC voltage levels. In this way, vehicle components from different venders other than vehicle producers themselves may be used directly without modification or implementation of extra hardware.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is an exemplary BESS according to an example.
**FIG. 2** is an exemplary NPC inverter according to an example.
**FIG. 3** is an exemplary battery system according to an example.
**FIG. 4** (a) (b) (c) are exemplary battery systems according to some examples.
**FIG. 5** is an exemplary flowchart according to an example.
**FIG. 6** is an exemplary vehicle comprising a battery system according to an example.

### DETAILED DESCRIPTION

The detailed description set forth below provides information and examples of the disclosed technology with sufficient detail to enable those skilled in the art to practice the disclosure.

A BESS in a vehicle usually comprises several battery packs stacked to provide high voltage to a motor driving system. However, large battery packs should be avoided since the weakest battery cell determines system capacity. Current battery packs do not seem suitable for high voltages. Nickel Foam-Fiber (NFF) batteries offer several advantages, e.g. better conductivity, high energy density, and prolonged battery life, making them suitable for applications like electric vehicles, portable electronics, and energy storage systems. For example, 10 to 12 racks of NFF battery cells can achieve a high DC voltage level of 1050 V to 1300 V. NPC inverters used in the motor driving system make it possible to use existing NFF batteries.

As discussed in the background, auxiliary components or loads e.g. fans, heat pumps, compressors, heaters, cooling system, climate system e.g. in the vehicle may operate with different voltage levels. A battery system having the capability of providing different voltage supply levels to these auxiliary components or loads is developed to provide a cost-effective solution on entire system level.

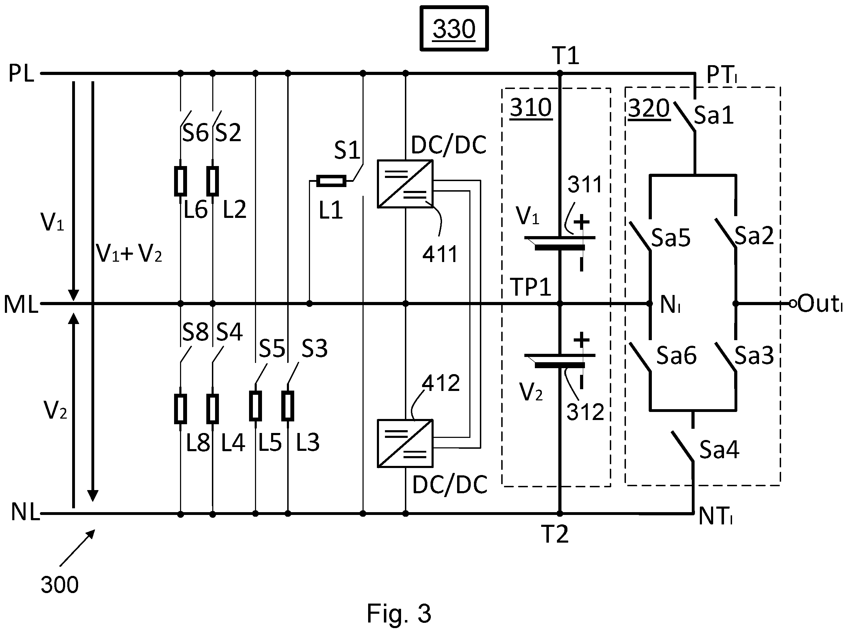

**Fig. 3** is an exemplary battery system **300** having a middle bus line **ML**, a positive bus line **PL** and a negative bus line **NL** according to an example. The battery system 300 comprises a battery module **310** comprising two battery packs stacked, a first battery pack **311** with a first voltage level **V1** and a second battery pack **312** with a second voltage level **V2.** The battery module 310 further comprises a first tap **TP1**, i.e. a neutral terminal of the battery module 310, placed at the connection point of the first and second battery packs. The battery module 310 further comprises a first terminal **T1**, i.e. a positive terminal, and a second terminal **T2**, i.e. a negative terminal. The first tap TP1 is connected to the middle bus line ML, the first terminal T1 is connected to the positive bus line PL and the second terminal T2 is connected to the negative bus line NL. The battery system 300 further comprises a multilevel neutral point clamped (NPC) inverter **320** having a neutral terminal **N_{I}**, an output terminal **Out_{I}**, a positive terminal **PT_{I}** and a negative terminal **NT_{I}**. The NPC inverter 320 is a 3-level NPC inverter implemented by switching transistors denoted by **Sa1**, **...Sa6.** The neutral terminal N_{I} of the multilevel NPC inverter 320 is connected to the first tap TP1 of the battery module 310, and the positive and negative terminals PT_{I}, NT_{I} of the multilevel NPC inverter 320 are connected to the first and second terminals T1, T2 of the battery module 310 respectively.

The battery system 300 further comprises one or more direct current to direct current converters DC/DCs. As can be seen from Fig.3, one DC/DC converter **411** is connected between the positive and middle bus lines PL, ML, one DC/DC converter **412** is connected between the negative and middle bus lines NL, ML. The one or more DC/DC converters 411, 412 may convert the high voltage levels, e.g. V1, V2, to a lower voltage level to supply one or more low voltage systems, e.g. 12V system, 24V system, 48V system, comprised in the vehicle.

The battery module 310 provides at least 3 voltage levels, V1, V2 and V1+V2. To balance the loads of the battery module 310, at least two auxiliary loads **L1, L2, ...L8** represented by resistor symbols in the figure may be connected either between the positive and negative bus lines PL, NL, or between the positive and middle bus lines PL, ML, or between the negative and middle bus lines NL, ML. The at least two auxiliary loads L1, L2, ...L8 may comprise any high voltage components, e.g. at least one of fans, heat pumps, motor loads, compressors, heaters, cooling system, climate system, resistive loads, just to mention some examples. The high voltage components usually have contactors that can connect them to the voltage bus lines. The at least two auxiliary loads L1, L2, ... L8 may be connected to the bus lines directly or via switches **S1, S2...S8.** That is the connections of the two or more auxiliary loads L1, L2, ...L8 to the bus lines of the battery system 300 are configurable depending on the required supply voltage levels of the two or more auxiliary loads L 1, L2, ... L8. The connections of the two or more auxiliary loads L 1, L2, ... L8 to the bus lines PL, ML, NL are configurable and the powers of the two or more auxiliary loads L1, L2, ... L8 are controllable to balance the loads of the battery module 310.

The battery system 300 may comprise a control circuitry 330 for controlling charging and discharging process of the battery module 310, controlling operation of the NPC inverter 320, the DC/DC converters 411, 412, controlling the switches S1, S2... S8 to be turned on and off etc.

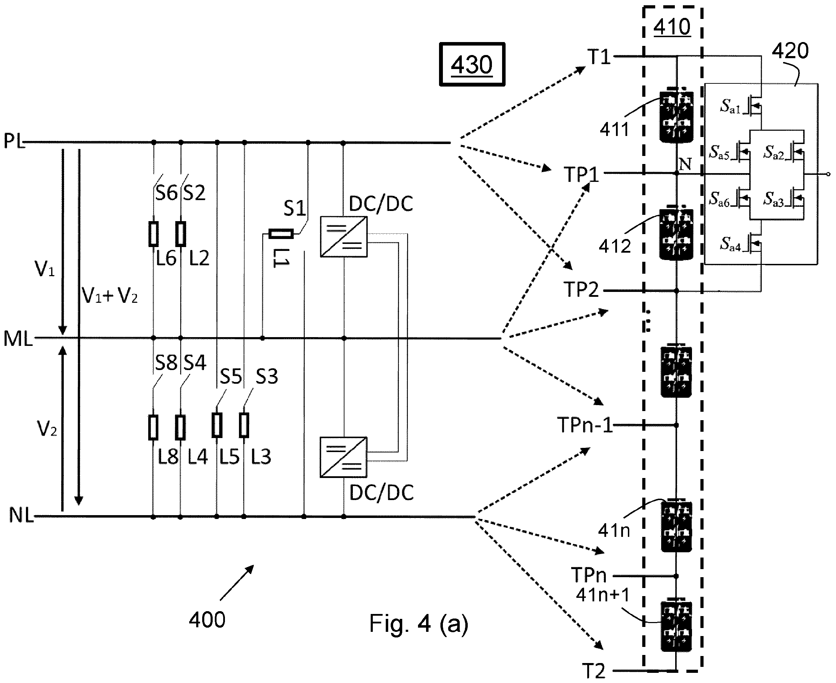

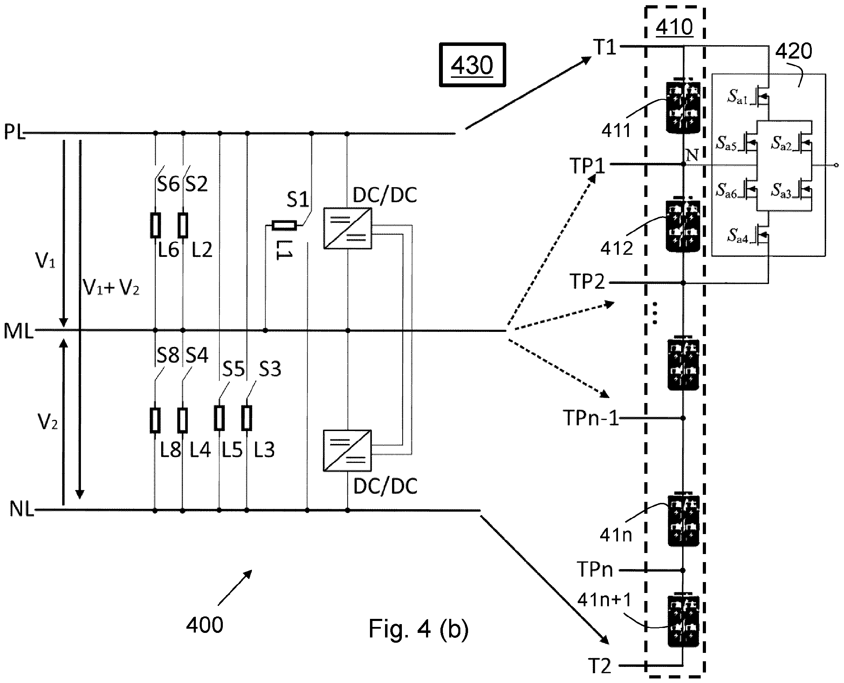

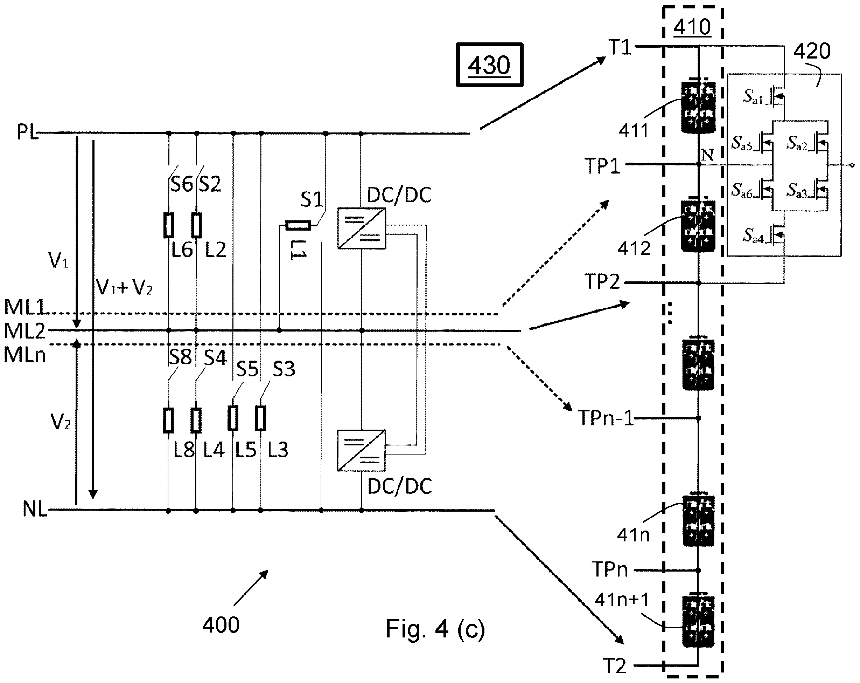

**Fig. 4** (a) is an exemplary battery system **400** having a middle bus line **ML**, a positive bus line **PL** and a negative bus line **NL** according to another example. The battery system 400 comprises a battery module **410** comprising two or more battery packs **411, 412, ...41n**, **41n+1** stacked, where n is a positive integer. The battery module **410** comprises a first terminal **T1** and a second terminal **T2**, and two or more taps **TP1, TP2, ...TPn-1, TPn** placed between the first and second terminals T1, T2 at respective connection points between any two battery packs. For example, the first tap TP1 is placed at the connection point of the first and second battery packs 411, 412. The nth tap TPn is placed at the connection point of the n-th battery pack 41n and (n+1)-th battery pack 41n+1. The number of taps and the locations to place the taps may be fixed or varied depending on the number of auxiliary loads L1, L2, ..., L8 and the required voltage levels of the number of auxiliary loads L1, L2,..., L8. The connections of the middle bus line ML, positive bus line PL and negative bus line NL to the battery module 410 may also be fixed or varied, indicated by dotted line arrows. For example, the positive bus line PL may connect to the first terminal T1 or to any one of the taps TP1, TP2, ... TPn-1 except the last tap TPn, the negative bus line NL may connect to the second terminal T2 or to any one of the taps TP2, ... TPn except the first tap TP1, the middle bus line ML may connect to any one of the taps TP1, TP2, ... TPn-1, TPn. In this way, the taps are made accessible for the auxiliary loads L1, L2, ..., L8, and multiple different voltage levels are available for various auxiliary loads.

According to some examples, as shown in **Fig. 4(b)****,** the positive bus line PL may be connected to the first terminal T1 of the battery module 410, the middle bus line ML may be connected to any one of the two or more taps TP1, TP2, ... TPn-1, TPn, and the negative bus line NL may be connected to the second terminal T2 of the battery module 410.

According to some examples, as shown in **Fig. 4(c)****,** the battery system 400 may comprise at least two middle bus lines MI,1, ML2, ... MLn. The positive bus line PL may be connected to the first terminal T1 of the battery module 410, the at least two middle bus lines ML1, ML2, ...MLn may be respectively connected to the two or more taps TP1, TP2, ... TPn-1, TPn, and the negative bus line NL may be connected to the second terminal T2 of the battery module 410.

As in Fig. 3, two or more auxiliary loads L1, L2,... may be connected either between the positive and negative bus lines PL, NL, or between the positive and middle bus lines PL, ML, or between the negative and middle bus lines NL, ML, directly or via respective switches S1, S2... such that the connection of the two or more auxiliary loads L 1, L2, ... are configurable to balance the loads of the battery module 410.

The battery system 400 may comprise one or more NPC inverter **420.** The NPC inverter 420 may connect to any two of the battery packs in the battery module 410. In Fig.4, the NPC inverter 420 is connected to the first and second battery pack 411, 412 and the neutral terminal N of the NPC inverter 420 is connected to the first tap TP1.

The battery system 400 may comprise a control circuitry **430** for controlling charging and discharging process of the battery module 410, controlling operation of the NPC inverter 420, the DC/DC converters, controlling the switches S1, S2... S8 to be turned on and off etc.

The operation of one or more DC/DC converters may be configurable to balance the loads of the battery module 310, 410. The operation of one or more DC/DC converters may also be configurable to control charging or discharging of the battery module 310, 410. This may be achieved by adjusting current flows in one or more DC/DC converters, thereby regulating power flows to one or more low voltage systems, or power flows to and from the battery module 310, 410.

The NPC inverter 320, 420 may be implemented using NPC inverters already sourced off the shelf. Using NPC inverter in the battery system 300, 400 makes it possible to use existing NFF batteries, and redesign battery pack based on existing racks is also possible. Further, the NPC inverter can also supply the loads from the grid when the battery module 310, 410 are disconnected.

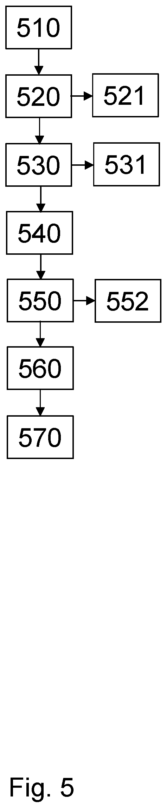

A method **500** for distributing power from a battery system 300, 400 to two or more auxiliary loads L1, L2, ... will be described with reference to **Fig. 5****.** The method comprises at least one of the following steps or actions, which may be performed in any suitable order.

**510.** Configuring the battery system 300, 400 to have a positive DC bus line PL, a negative DC bus line NL and a middle DC bus line ML.

**520.** Providing a battery module 310, 410 having a first tap TP1, a first terminal T1 and a second terminal T2.

**521.** Providing a connection between the first tap TP1 and the middle bus line ML, a connection between the first terminal T1 and the positive bus line PL and a connection between the second terminal T2 and the negative bus line NL.

**530.** Providing a multilevel neutral point clamped (NPC) inverter 320 having a neutral terminal N_{I}, an output terminal Outi, a positive terminal PT_{I} and a negative terminal NTi.

**531.** Providing a connection between the neutral terminal NI of the multilevel NPC inverter 320 and the first tap TP1 of the battery module 310, 410, a connection between the positive terminal PT_{I} of the multilevel NPC inverter 320 and the first terminal T1 of the battery module 310, 410, and a connection between the negative terminal NT_{I} of the multilevel NPC inverter 320 and the second terminal T2 of the battery module 310, 410.

**540.** Providing connections to two or more auxiliary loads L1, L2, ... and to one or more direct current to direct current converters (DC/DC), such that the two or more auxiliary loads L1, L2,... and the one or more DC/DC converters are connected either between the positive and negative bus lines PL, NL, or between the positive and middle bus lines PL, ML, or between the negative and middle bus lines NL, ML, directly or via respective switches S1, S2....The switches S1, S2... may be triggered to be turned on and off by the control circuitry 330, 430 depending on the required power of the auxiliary loads and State of Charge (SoC) of the battery module 310, 410. The two or more auxiliary loads L1, L2, ...may be controlled in power via communications commands. For example, a thermal heater may be steered via communications commands and a pulse-width modulation (PWM) may be used to control heating power. The same thing may be done for an active cooling unit, where a speed of a compressor may be controlled.

**550.** Configuring operation of the one or more DC/DC converters to balance the loads of the battery module 310, 410 and/or control charging/discharging of the battery module 310, 410.

Configuring the operation of the one or more DC/DC converters may comprise:
**552.** Adjusting current flows in the one or more DC/DC converters, thereby regulating power flows to one or more low voltage systems, and/or power flow to/from the battery module 310, 410. The operation of the one or more DC/DC converters may be controlled by the control circuitry 330, 430.

The method may further comprise:
**560.** Providing two or more battery packs in the battery module 410.
**570.** Providing two or more taps TP1, TP2, ... TPn placed at respective connection points between any two battery packs. A number of taps and the location to place the taps may be fixed or varied depending on required voltage levels of the two or more auxiliary loads L1, L2, ... L8.

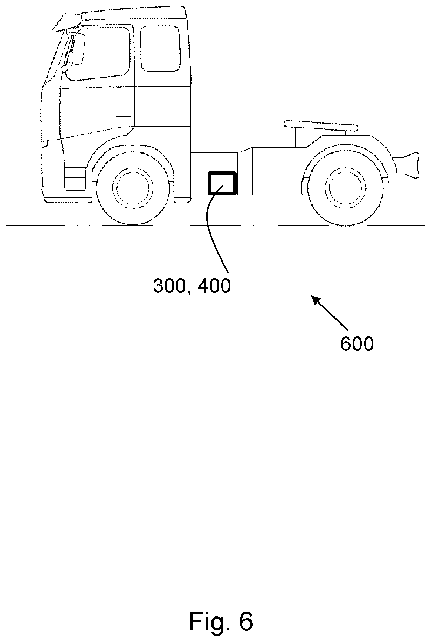

The battery system 300, 400 may be implemented in a motor drive system of a vehicle. **Fig.6** shows an exemplary vehicle **600** in which the battery system 300, 400 may be implemented. The vehicle 600 comprises a battery system 300, 400 as described above. The vehicle **600** is a heavy-duty vehicle, such as truck, bus, and construction equipment, among other vehicle types. Although the disclosure may be described with respect to a particular vehicle, the disclosure is not restricted to any particular vehicle, but may be also used in other vehicles such as, trailers, wheel loaders, articulated haulers, excavators, backhoe loaders, passenger cars, marine vessels etc. It may also be applied in various industrial construction machines or working machines.

The vehicle **600** may be a truck for towing one or more trailers (not shown). It shall however be understood that the vehicle may be any other type of vehicle, such as another type of truck, a bus, a passenger car, and construction equipment, such as an excavator, a wheel loader, etc. The vehicle **600** may be operated by a user (not shown) and/or be at least partly automatically driven, i.e., it may be a vehicle comprising autonomous driving capabilities. The vehicle **600** may be a fully electric vehicle or a hybrid vehicle or it may be driven only using a combustion engine. The vehicle **600** may comprise one or more electric motors/generators and/or an internal combustion engine (not shown) for driving the vehicle **600.** The term vehicle is used herein when referring to any of the above types of vehicles.

### Some examples:

Example 1. A battery system (300, 400) having a middle bus line (ML), a positive bus line (PL) and a negative bus line (NL), wherein the battery system (300, 400) comprises:
   a battery module (310, 410) having a first tap (TP1), a first terminal (T1) and a second terminal (T2), wherein the first tap (TP1) is connected to the middle bus line (ML), the first terminal (T1) is connected to the positive bus line (PL) and the second terminal (T2) is connected to the negative bus line (NL);
   a multilevel neutral point clamped, NPC, inverter (320) having a neutral terminal (N_{I}), an output terminal (Outi), a positive terminal (PT_{I}) and a negative terminal (NT_{I}), wherein the neutral terminal (N_{I}) of the multilevel NPC inverter (320) is connected to the first tap (TP1) of the battery module (310), and the positive and negative terminals (PT_{I}, NT_{I}) of the multilevel NPC inverter (320) are connected to the first and second terminals (T1, T2) of the battery module (310) respectively; and
   at least one direct current to direct current converter, DC/DC, connected either between the positive and negative bus lines (PL, NL), or between the positive and middle bus lines (PL, ML), or between the negative and middle bus lines (NL, ML), wherein operation of the at least one DC/DC converter is configurable for at least one of balancing loads of the battery module (310, 410) and controlling charging/discharging of the battery module (310, 410); and wherein
   at least two auxiliary loads (L1, L2, ...) are connected either between the positive and negative bus lines (PL, NL), or between the positive and middle bus lines (PL, ML), or between the negative and middle bus lines (NL, ML), directly or via respective switches (S1, S2...).
Example 2. The battery system (300, 400) according to Example 1, wherein the operation of the at least one DC/DC converter is configurable by adjusting current flows in the at least one DC/DC converter, thereby regulating at least one of power flows to at least one low voltage system and power flows to and from the battery module (310, 410).
Example 3. The battery system (300, 400) according to any one of Examples 1-2, wherein the at least two auxiliary loads (L1, L2, ...) comprise at least one of fans, heat pumps, motor loads, compressors, heaters, cooling system, climate system and resistive loads.
Example 4. The battery system (300, 400) according to Example 2, wherein the at least one low voltage system comprises at least one of a 12V system, a 24V system and a 48V system.
Example 5. The battery system (300, 400) according to any one of Examples 1-4, wherein the battery module (410) comprises two or more battery packs (411, 412, ... 41n, 41n+1) stacked and two or more taps (TP1, TP2, ...TPn-1, TPn) placed at respective connection points between any two battery packs.
Example 6. The battery system (300, 400) according to Example 5, wherein a number of taps is fixed or varied depending on the number of auxiliary loads (L1, L2, ...) and required voltage levels of the auxiliary loads (L1, L2, ...).
Example 7. The battery system (300, 400) according to Example 6, wherein locations to place the number of taps are fixed or varied depending on the required voltage levels of the auxiliary loads (L1, L2, ...).
Example 8. The battery system (300, 400) according to any one of Examples 5-7, wherein the connections of the middle bus line, the positive bus line and the negative bust line to the battery module (410) are fixed or varied.
Example 9. The battery system (300, 400) according to Example 8, wherein the positive bus line (PL) is connected to the first terminal (T 1) of the battery module (410), the middle bus line (ML) is connected to any one of the two or more taps (TP1, TP2, ... TPn-1, TPn), and the negative bus line (NL) is connected to the second terminal (T2) of the battery module (410).
Example 10. The battery system (300, 400) according to Example 8, wherein the positive bus line (PL) is connected to any one of the taps (TP1, TP2, ... TPn-1) except the last tap (TPn), the negative bus line (NL) is connected to the second terminal (T2) or to any one of the taps (TP2, ... TPn) except the first tap (TP1) and the middle bus line ML is connected to any one of the two or more taps (TP1, TP2, ... TPn-1, TPn).
Example 11. The battery system (300, 400) according to any one of Examples 5-7, wherein the battery system (400) comprises at least two middle bus lines (ML1, ML2, ...), and wherein the positive bus line (PL) is connected to the first terminal (T1) of the battery module (410), the at least two middle bus lines (ML1, ML2, ...) are respectively connected to the two or more taps (TP1, TP2, ... TPn-1, TPn), and the negative bus line (NL) is connected to the second terminal (T2) of the battery module (410).
Example 12. A vehicle (600) comprises a battery system (300, 400) according to any one of Examples 1-11.
Example 13. A method (500) for distributing power from a battery system (300, 400) to at least two auxiliary loads (L1, L2, ...) comprising:
   configuring (510) the battery system (300, 400) to have a positive bus line (PL), a negative bus line (NL) and a middle bus line (ML);
   providing (520) a battery module (310, 410) having a first tap (TP1), a first terminal (T1) and a second terminal (T2);
   providing (521) a connection between the first tap (TP1) and the middle bus line (ML), a connection between the first terminal (T1) and the positive bus line (PL) and a connection between the second terminal (T2) and the negative bus line (NL);
   providing (530) a multilevel neutral point clamped, NPC, inverter (320) having a neutral terminal (N_{I}), an output terminal (Outi), a positive terminal (PT_{I}) and a negative terminal (NTi);
   providing (531) a connection between the neutral terminal (N_{I}) of the multilevel NPC inverter (320) and the first tap (TP 1) of the battery module (310, 410), a connection between the positive terminal (PT_{I}) of the multilevel NPC inverter (320) and the first terminal (T1) of the battery module (310, 410), and a connection between the negative terminal (NT_{I}) of the multilevel NPC inverter (320) and the second terminal (T2) of the battery module (310, 410);
   providing (540) connections to at least two auxiliary loads (L1, L2, ...) and to at least one direct current to direct current converter (DC/DC), such that the at least two auxiliary loads (L1, L2,...) and the at least one DC/DC converter are connected either between the positive and negative bus lines (PL, NL), or between the positive and middle bus lines (PL, ML), or between the negative and middle bus lines (NL, ML), directly or via respective switches (S1, S2...); and
   configuring (550) operation of the at last one DC/DC converter for at least one of balancing loads of the battery module (310, 410) and controlling charging/discharging of the battery module (310, 410).
Example 14. The method according to Example 13, wherein configuring (550) operation of the at least one DC/DC converters comprise adjusting (552) current flows in the at least one DC/DC converters, thereby regulating at least one of power flows to at least one low voltage systems and power flows to/from the battery module (310, 410).
Example 15. The method according to any one of Examples 13-14, further comprising:
   providing (560) at least two battery packs in the battery module (410); and
   providing (570) at least two taps (TP1, TP2, ... TPn) placed at respective connection points between any two battery packs.
Example 16. The method according to Example 15, wherein a number of taps and locations to place the taps are fixed or varied depending on required voltage levels of the at least two auxiliary loads (L1, L2, ...).
Example 17. The method according to any one of Examples 15-16, further comprising providing at least two middle bus lines (ML1, ML2, ...), and wherein the positive bus line (PL) is connected to the first terminal (T 1) of the battery module (410), the at least two middle bus lines (ML1, ML2, ...) are respectively connected to the two or more taps (TP1, TP2, ... TPn-1, TPn), and the negative bus line (NL) is connected to the second terminal (T2) of the battery module (410).

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A battery system (300, 400) having a middle bus line (ML), a positive bus line (PL) and a negative bus line (NL), wherein the battery system (300, 400) comprises:
a battery module (310, 410) having a first tap (TP1), a first terminal (T1) and a second terminal (T2), wherein the first tap (TP1) is connected to the middle bus line (ML), the first terminal (T1) is connected to the positive bus line (PL) and the second terminal (T2) is connected to the negative bus line (NL);
a multilevel neutral point clamped, NPC, inverter (320) having a neutral terminal (N_{I}), an output terminal (Outi), a positive terminal (PT_{I}) and a negative terminal (NT_{I}), wherein the neutral terminal (N_{I}) of the multilevel NPC inverter (320) is connected to the first tap (TP1) of the battery module (310), and the positive and negative terminals (PT_{I}, NTi) of the multilevel NPC inverter (320) are connected to the first and second terminals (T1, T2) of the battery module (310) respectively; and
at least one direct current to direct current converter, DC/DC, connected either between the positive and negative bus lines (PL, NL), or between the positive and middle bus lines (PL, ML), or between the negative and middle bus lines (NL, ML), wherein operation of the at least one DC/DC converter is configurable for at least one of balancing loads of the battery module (310, 410) and controlling charging/discharging of the battery module (310, 410); and wherein
at least two auxiliary loads (L1, L2, ...) are connected either between the positive and negative bus lines (PL, NL), or between the positive and middle bus lines (PL, ML), or between the negative and middle bus lines (NL, ML), directly or via respective switches (S1, S2...).

2. The battery system (300, 400) according to claim 1, wherein the operation of the at least one DC/DC converter is configurable by adjusting current flows in the at least one DC/DC converter, thereby regulating at least one of power flows to at least one low voltage system and power flows to and from the battery module (310, 410).

3. The battery system (300, 400) according to any one of claims 1-2, wherein the at least two auxiliary loads (L1, L2, ...) comprise at least one of fans, heat pumps, motor loads, compressors, heaters, cooling system, climate system and resistive loads.

4. The battery system (300, 400) according to claim 2, wherein the at least one low voltage system comprises at least one of a 12V system, a 24V system and a 48V system.

5. The battery system (300, 400) according to any one of claims 1-4, wherein the battery module (410) comprises two or more battery packs (411, 412, ... 41n, 41n+1) stacked and two or more taps (TP1, TP2, ... TPn-1, TPn) placed at respective connection points between any two battery packs.

6. The battery system (300, 400) according to claim 5, wherein a number of taps is fixed or varied depending on the number of auxiliary loads (L1, L2, ...) and required voltage levels of the auxiliary loads (L1, L2, ...).

7. The battery system (300, 400) according to claim 6, wherein locations to place the number of taps are fixed or varied depending on the required voltage levels of the auxiliary loads (L1, L2, ...).

8. The battery system (300, 400) according to any one of claims 5-7, wherein the connections of the middle bus line, the positive bus line and the negative bust line to the battery module (410) are fixed or varied.

9. The battery system (300, 400) according to claim 8, wherein the positive bus line (PL) is connected to the first terminal (T 1) of the battery module (410), the middle bus line (ML) is connected to any one of the two or more taps (TP1, TP2, ... TPn-1, TPn), and the negative bus line (NL) is connected to the second terminal (T2) of the battery module (410).

10. The battery system (300, 400) according to claim 8, wherein the positive bus line (PL) is connected to any one of the taps (TP1, TP2, ... TPn-1) except the last tap (TPn), the negative bus line (NL) is connected to the second terminal (T2) or to any one of the taps (TP2, ... TPn) except the first tap (TP1) and the middle bus line ML is connected to any one of the two or more taps (TP1, TP2, ... TPn-1, TPn).

11. The battery system (300, 400) according to any one of claims 5-7, wherein the battery system (400) comprises at least two middle bus lines (MI,1, ML2, ...), and wherein the positive bus line (PL) is connected to the first terminal (T1) of the battery module (410), the at least two middle bus lines (ML1, ML2, ...) are respectively connected to the two or more taps (TP1, TP2, ... TPn-1, TPn), and the negative bus line (NL) is connected to the second terminal (T2) of the battery module (410).

12. A vehicle (600) comprises a battery system (300, 400) according to any one of the claims 1-11.

13. A method (500) for distributing power from a battery system (300, 400) to at least two auxiliary loads (L1, L2, ...) comprising:
configuring (510) the battery system (300, 400) to have a positive bus line (PL), a negative bus line (NL) and a middle bus line (ML);
providing (520) a battery module (310, 410) having a first tap (TP1), a first terminal (T1) and a second terminal (T2);
providing (521) a connection between the first tap (TP1) and the middle bus line (ML), a connection between the first terminal (T1) and the positive bus line (PL) and a connection between the second terminal (T2) and the negative bus line (NL);
providing (530) a multilevel neutral point clamped, NPC, inverter (320) having a neutral terminal (N_{I}), an output terminal (Outi), a positive terminal (PT_{I}) and a negative terminal (NTi);
providing (531) a connection between the neutral terminal (N_{I}) of the multilevel NPC inverter (320) and the first tap (TP 1) of the battery module (310, 410), a connection between the positive terminal (PT_{I}) of the multilevel NPC inverter (320) and the first terminal (T1) of the battery module (310, 410), and a connection between the negative terminal (NT_{I}) of the multilevel NPC inverter (320) and the second terminal (T2) of the battery module (310, 410);
providing (540) connections to at least two auxiliary loads (L1, L2, ...) and to at least one direct current to direct current converter (DC/DC), such that the at least two auxiliary loads (L1, L2,...) and the at least one DC/DC converter are connected either between the positive and negative bus lines (PL, NL), or between the positive and middle bus lines (PL, ML), or between the negative and middle bus lines (NL, ML), directly or via respective switches (S1, S2...); and
configuring (550) operation of the at least one DC/DC converter for at least one of balancing loads of the battery module (310, 410) and controlling charging/discharging of the battery module (310, 410).

14. The method according to claim 13, wherein configuring (550) operation of the at least one DC/DC converter comprises adjusting (552) current flows in the at least one DC/DC converters, thereby regulating at least one of power flows to at least one low voltage systems and power flows to/from the battery module (310, 410).

15. The method according to any one of claims 13-14, further comprising:
providing (560) at least two battery packs in the battery module (410); and
providing (570) at least two taps (TP1, TP2, ... TPn) placed at respective connection points between any two battery packs.

## Amended claims

### Amended claims in accordance with Rule 137(2) EPC.

1. A battery system (300, 400) having a middle bus line (ML), a positive bus line (PL) and a negative bus line (NL), wherein the battery system (300, 400) comprises:
a battery module (310, 410) having a first terminal (T1) and a second terminal (T2), wherein the battery module (410) comprises two or more battery packs (411, 412, ... 41n, 41n+1) stacked and two or more taps (TP1, TP2, ...TPn-1, TPn) placed at respective connection points between any two battery packs, and wherein the connections of the middle bus line, the positive bus line and the negative bust line to the battery module (410) are configured to be fixed or varied ;
a multilevel neutral point clamped, NPC, inverter (320) having a neutral terminal (N₁), an output terminal (Out_{I}), a positive terminal (PT_{I}) and a negative terminal (NT_{I}), wherein the neutral terminal (N_{I}) of the multilevel NPC inverter (320) is connected to the first tap (TP1) of the battery module (310), and the positive and negative terminals (PT_{I}, NT_{I}) of the multilevel NPC inverter (320) are connected to the first and second terminals (T1, T2) of the battery module (310) respectively; and
at least one direct current to direct current converter, DC/DC, connected either between the positive and negative bus lines (PL, NL), or between the positive and middle bus lines (PL, ML), or between the negative and middle bus lines (NL, ML), wherein operation of the at least one DC/DC converter is configured to balance loads of the battery module (310, 410) and/or control charging/discharging of the battery module (310, 410);
at least two auxiliary loads (L1, L2, ...) are connected either between the positive and negative bus lines (PL, NL), or between the positive and middle bus lines (PL, ML), or between the negative and middle bus lines (NL, ML), directly or via respective switches (S1, S2...).

2. The battery system (300, 400) according to claim 1, wherein the operation of the at least one DC/DC converter is configured to adjust current flows in the at least one DC/DC converter, thereby regulating at least one of power flows to at least one low voltage system and power flows to and from the battery module (310, 410).

3. The battery system (300, 400) according to any one of claims 1-2, wherein the at least two auxiliary loads (L1, L2, ...) comprise at least one of fans, heat pumps, motor loads, compressors, heaters, cooling system, climate system and resistive loads.

4. The battery system (300, 400) according to claim 2, wherein the at least one low voltage system comprises at least one of a 12V system, a 24V system and a 48V system.

5. The battery system (300, 400) according to claim 1, wherein a number of taps is configured to be fixed or varied depending on the number of auxiliary loads (L1, L2, ...) and required voltage levels of the auxiliary loads (L1, L2, ...).

6. The battery system (300, 400) according to claim 5, wherein locations to place the number of taps are configured to be fixed or varied depending on required voltage levels of the auxiliary loads (L1, L2, ...).

7. The battery system (300, 400) according to claim 1, wherein the positive bus line (PL) is connected to the first terminal (T1) of the battery module (410), the middle bus line (ML) is connected to any one of the two or more taps (TP1, TP2, ...TPn-1, TPn), and the negative bus line (NL) is connected to the second terminal (T2) of the battery module (410).

8. The battery system (300, 400) according to claim 1, wherein the positive bus line (PL) is connected to any one of the taps (TP1, TP2, ...TPn-1) except a last tap (TPn), the negative bus line (NL) is connected to the second terminal (T2) or to any one of the taps (TP2, ...TPn) except a first tap (TP1) and the middle bus line ML is connected to any one of the two or more taps (TP1, TP2, ...TPn-1, TPn).

9. The battery system (300, 400) according to any one of claims 1-6, wherein the battery system (400) comprises at least two middle bus lines (ML1, ML2, ...), and wherein the positive bus line (PL) is connected to the first terminal (T1) of the battery module (410), the at least two middle bus lines (ML1, ML2, ...) are respectively connected to the two or more taps (TP1, TP2, ...TPn-1, TPn), and the negative bus line (NL) is connected to the second terminal (T2) of the battery module (410).

10. A vehicle (600) comprises a battery system (300, 400) according to any one of the claims 1-9.

11. A method (500) for distributing power from a battery system (300, 400) to at least two auxiliary loads (L1, L2, ...) comprising:
configuring (510) the battery system (300, 400) to have a positive bus line (PL), a negative bus line (NL) and a middle bus line (ML);
providing (520) a battery module (310, 410) having a first terminal (T1) and a second terminal (T2);
providing (560) at least two battery packs in the battery module (410);
providing (570) at least two taps (TP1, TP2, ...TPn) placed at respective connection points between any two battery packs;
providing (521) a connection between any one of the at least two taps (TP1) and the middle bus line (ML), a connection between the first terminal (T1) and the positive bus line (PL) and a connection between the second terminal (T2) and the negative bus line (NL);
providing (530) a multilevel neutral point clamped, NPC, inverter (320) having a neutral terminal (N_{I}), an output terminal (Out_{I}), a positive terminal (PT_{I}) and a negative terminal (NT_{I});
providing (531) a connection between the neutral terminal (N_{I}) of the multilevel NPC inverter (320) and the first tap (TP1) of the battery module (310, 410), a connection between the positive terminal (PT_{I}) of the multilevel NPC inverter (320) and the first terminal (T1) of the battery module (310, 410), and a connection between the negative terminal (NT_{I}) of the multilevel NPC inverter (320) and the second terminal (T2) of the battery module (310, 410);
providing (540) connections to at least two auxiliary loads (L1, L2, ...) and to at least one direct current to direct current converter, DC/DC, such that the at least two auxiliary loads (L1, L2,...) and the at least one DC/DC converter are connected either between the positive and negative bus lines (PL, NL), or between the positive and middle bus lines (PL, ML), or between the negative and middle bus lines (NL, ML), directly or via respective switches (S1, S2...); and
configuring (550) operation of the at least one DC/DC converter for at least one of balancing loads of the battery module (310, 410) and controlling charging/discharging of the battery module (310, 410).

12. The method according to claim 11, wherein configuring (550) operation of the at least one DC/DC converter comprises adjusting (552) current flows in the at least one DC/DC converters, thereby regulating at least one of power flows to at least one low voltage system and power flows to/from the battery module (310, 410).
